# EUROPEAN PATENT SPECIFICATION

(11) **EP 4 380 372 B1**
(45) Date of publication and mention of the grant of the patent: **24.12.2025**
(21) Application number: 22853710.6
(22) Date of filing: 26.07.2022
(51) Int. Cl.: A23G 4/08, A23G 4/10, A23G 4/14, A61K 9/68, A23G 4/06

(54) **MINERAL-FREE CHEWING GUM BASES AND CHEWING GUM COMPOSITIONS**
MINERALFREIE KAUGUMMIGRUNDSTOFFE UND KAUGUMMIZUSAMMENSETZUNGEN
BASES DE GOMME À MÂCHER SANS SUBSTANCE MINÉRALE ET COMPOSITIONS DE GOMME À MÂCHER

(30) Priority: 05.08.2021 US 202163229678 P
(43) Date of publication of application: 12.06.2024
(73) Proprietor: Wm. Wrigley Jr. Company, Chicago, IL 60642 (US)
(72) Inventor: XIA, Xiaohu, Chicago, Illinois 60642 (US); RUSSELL, Michael P., Chicago, Illinois 60642 (US)
(74) Representative: Haseltine Lake Kempner LLP
(86) International application number: PCT/US2022/038337
(87) International publication number: WO 2023/014542

(56) References cited:
- WO-A1-2011/139943
- WO-A1-2021/021626
- US-A- 5 482 722
- US-A- 5 482 722
- US-A1- 2003 215 543
- US-A1- 2004 001 903
- US-A1- 2011 262 586
- US-A1- 2013 337 107
- US-B1- 6 773 730

## Description

### BACKGROUND OF THE DISCLOSURE

WO 2021/021626 A1 discloses chewing gum bases, where mineral filler in the gum base formulation has been replaced with a polyol. The chewing gum bases of the present disclosure are thus essentially free of mineral filler, and contain a polyol, such as mannitol. Also disclosed are processes for producing the chewing gum bases. The processes of the present disclosure utilize polyol as a replacement for mineral fillers during various production stages. Confectionery products, such as chewing gums, that comprise the chewing gum bases are also disclosed. The European Food Safety Authority (EFSA) has identified certain food and food ingredients as nanomaterials, and recently produced a guidance for the risk assessment of nanoscience and nanotechnology applications in the food and feed chain. Nanomaterial means a natural, incidental, or manufactured material containing particles in an unbound state or as an aggregate or as an agglomerate and where, for 50% or more of the particles in the number-size distribution, one or more external dimensions is in the size range 1-100 nm. In the food sector, titanium dioxide, calcium carbonate, iron oxides and hydroxides, calcium silicate, tricalcium phosphates, synthetic amorphous silicas, and organic and composite compounds are typically identified as containing nanomaterials.

Mineral fillers, such as talc and calcium carbonate, are commonly included in chewing gum bases as bulk fillers. Mineral fillers may also be utilized during the formation of chewing gum bases. For example, such fillers may be used at multiple stages during the gum base production process, such as for rubber grinding, base compounding, base formulas, and dusting, among others. The mineral fillers may function as a processing aid, a texture modifier, and an anti-caking and cost-saving agent.

There is a growing concern that mineral fillers may be considered nanomaterials under certain regulatory definitions and potentially banned for consumer safety. Although it is possible to produce chewing gum bases without the use of mineral fillers, the resulting gum bases may be lower in viscosity, have a lower density, and have increased tack, which could result in added challenges during shipping and handling of the gum bases. Costly changes in established gum base production processes may also be necessary to produce chewing gum bases that are free of mineral filler.

It would thus be desirable to produce chewing gum bases that do not contain mineral filler, but that closely maintain the function and benefit associated with mineral filler, with minimal impact to the properties of the resulting gum base or the process used to produce the gum base.

### SUMMARY OF THE DISCLOSURE

The present disclosure is directed to chewing gum bases and chewing gum compositions, where mineral filler in the gum base formulation has been replaced with at least one chewing gum base filler component selected from the group consisting of water-insoluble polysaccharides and derivatives thereof, water-insoluble bamboo fibers, and combinations thereof. The chewing gum bases and chewing gum compositions of the present disclosure are thus essentially free of mineral filler.

In one aspect, the present disclosure is directed to a chewing gum base comprising: at least one chewing gum base filler component selected from the group consisting of
(i) water-insoluble polysaccharides and derivatives thereof, wherein the water-insoluble polysaccharides comprise hydroxypropyl starch,
(ii) water-insoluble bamboo fibers, and
(iii) combinations thereof; and a chewing gum non-filler base component,

wherein the chewing gum base is comprises mineral filler in an
amount of less than 0.5% by weight of the chewing gum base.

In another aspect, the present disclosure is directed to a chewing gum composition comprising
(1) at least one chewing gum base filler component selected from the group consisting of
   (i) water-insoluble polysaccharides and derivatives thereof wherein the water-insoluble polysaccharides comprise hydroxy propyl starch,
   (ii) water-insoluble bamboo fibers, and
   (iii) combinations thereof, and
(2) a chewing gum non-filler base component,
   wherein the chewing gum composition comprises mineral filler in an
   amount of less than 0 5% by weight of the chewing gum base

In each or any of the above- or below-mentioned embodiments, the chewing gum base may include the chewing gum base filler component in an amount of from 0.5% to 25% by weight of the chewing gum base.

In each or any of the above- or below-mentioned embodiments, the chewing gum base may include the chewing gum non-filler base component in an amount of from 75% to 99.5% by weight of the chewing gum base.

In each or any of the above- or below-mentioned embodiments, the mineral filler may be selected from the group consisting of magnesium carbonate, calcium carbonate, ground limestone, magnesium silicate, aluminum silicate, clay alumina, talc, titanium dioxide, monocalcium phosphate, dicalcium phosphate, tricalcium phosphate, and calcium sulfate.

In each or any of the above- or below-mentioned embodiments, the water-insoluble proteins may include purified zein.

In each or any of the above- or below-mentioned embodiments, the chewing gum base may include mineral filler in an amount of less than 2% by weight of the chewing gum base.

In each or any of the above- or below-mentioned embodiments, the chewing gum base may include mineral filler in an amount of less than 0.5% by weight of the chewing gum base.

In each or any of the above- or below-mentioned embodiments, the chewing gum base may be free of mineral filler.

In each or any of the above- or below-mentioned embodiments, the chewing gum non-filler base component may include an elastomer.

In each or any of the above- or below-mentioned embodiments, the chewing gum non-filler base component may include at least one ingredient selected from the group consisting of elastomers, elastomer plasticizers, resins, emulsifiers, waxes, and antioxidants.

Other aspects of the present disclosure are described elsewhere herein.

### DETAILED DESCRIPTION OF THE DISCLOSURE

The present disclosure is directed to chewing gum bases and chewing gum compositions, where mineral filler in the gum base formulation has been replaced with at least one chewing gum base filler component selected from the group consisting of water-insoluble polysaccharides and derivatives thereof, water-insoluble bamboo fibers, and combinations thereof. The chewing gum bases and chewing gum compositions of the present disclosure are thus essentially free of mineral filler.

### Chewing gum base

Chewing gum generally comprises a water-soluble portion and a water insoluble portion. The water insoluble portion is referred to as the gum base. In certain non-limiting embodiments, the chewing gum base filler component according to this disclosure may be not water-soluble or may not display a substantial swelling capability upon contact with water. Most polysaccharides are water-soluble or dispersible. It has been discovered that, when starch (from different sources, e.g., potato, corn, wheat, etc.) is used as filler in a conventional gum base, the starch is generally chewed out. As such, depending on the usage requirements or preferences for the particular chewing gum bases and chewing gum compositions, water-soluble polysaccharides may not be suitable as a masticating material. Attempts were also made using different fractions of starch, such as the linear fraction of amylose and the branched fraction of amylopectin, but being water soluble components, they were lost from gum as they dissolve in saliva during mastication.

In certain non-limiting embodiments of the present chewing gum base, the chewing gum base filler component includes water-insoluble polysaccharides having an average unit length corresponding of at least 3, preferably greater than 60 saccharide units as a replacement for mineral fillers. Polysaccharides can be treated by heat, chemical, or enzyme treatment to make them water insoluble. The chewing gum bases, chewing gums, and processes for producing the chewing gum bases described herein are not limited in this regard. An embodiment of the water-insoluble polysaccharides according to the present disclosure comprises hydroxypropyl starch. Hydroxypropyl starch acetate is generally prepared using toluene as a solvent. Due to the high content of toluene in the synthesis, hydroxypropyl starch acetate was not generally pursued for gum application. However, in non-limiting embodiments of gum bases according to this disclosure, hydroxypropyl starch can be unexpectedly incorporated into the gum base as a replacement for mineral fillers.

In certain non-limiting embodiments, the chewing gum base filler component according to this disclosure may have substantially no sensory defects. In certain non-limiting embodiments, the chewing gum base filler component according to this disclosure may not chemically react with base and gum ingredients. In certain non-limiting embodiments, the chewing gum base filler component according to this disclosure may be a food grade substance.

Certain non-limiting embodiments of gum bases herein disclosed as not part of the present invention may comprise purified zein as water-insoluble protein. Zein is a water-insoluble prolamine (protein) obtained from corn. In non-limiting embodiments of gum bases according to this disclosure, purified zein can be incorporated into the gum base as a replacement for mineral fillers.

The present disclosure thus provides a chewing gum base that is essentially free of mineral filler. As used herein, the term "essentially free of mineral filler" means no mineral fillers are affirmatively added to the chewing gum base during production, and no mineral fillers are affirmatively used at any stage of gum base processing. The chewing gum bases of the present disclosure that are essentially free of mineral filler may typically contain mineral fillers in an amount of about 0% to about 5% by weight of the chewing gum base, including in amounts of less than 5%, less than 4%, less than 3%, less than 2%, less than 1%, less than 0.5%, less than 0.2%, or less than 0.1% by weight of the chewing gum base. Preferably, the chewing gum base is free of mineral filler (i.e., contains mineral fillers in an amount of 0%).

As used herein, the term "mineral filler" includes, but is not limited to, carbonate or precipitated carbonate types, such as magnesium and calcium carbonate, ground limestone, silicate types such as magnesium and aluminum silicate, clay alumina, talc, titanium dioxide, mono-, di- and tricalcium phosphate, calcium sulfate, kaolin clay, and combinations thereof. In one embodiment, the mineral filler is selected from the group consisting of talc, calcium carbonate, and combinations thereof.

The gum bases of the present disclosure will typically include the chewing gum base filler component in an amount of from about 0.5% to about 25% by weight of the gum base, and more typically in an amount of from about 5% to about 20% by weight of the gum base, or from about 5% to about 15% by weight of the gum base. In certain non-limiting embodiments of the chewing gum base according to the present disclosure, the chewing gum base includes the chewing gum non-filler base component in an amount of from 75% to 99.5% by weight of the chewing gum base, from about 80% to about 95% by weight of the gum base, or in certain embodiments, from about 75% to about 95% by weight of the gum base.

In addition to the chewing gum base filler component, the chewing gum bases of the present disclosure may contain any combination of elastomers, elastomer plasticizers, resins, emulsifiers, waxes, and other optional ingredients such as antioxidants. Elastomers provide the rubbery, cohesive nature to the gum which varies depending on this ingredient's chemical structure and how it is compounded with other ingredients. Elastomers suitable for use in the chewing gum base and chewing gum of the present disclosure include, but are not limited to, butadiene-styrene copolymers (SBR), isobutylene-isoprene copolymers (butyl rubber), polybutadiene, low or medium molecular weight polyisobutylene, and vinyl polymeric elastomers (polyvinyl acetate, polyethylene, vinyl acetate/vinyl laurate, vinyl acetate/vinyl stearate, ethylene/vinyl acetate) and combinations thereof. Natural elastomers which may be similarly incorporated into the gum bases of the present disclosure include jelutong, lechi caspi, perillo, sorva, massaranduba balata, massaranduba chocolate, nispero, rosindinha, chicle, gutta hang kang, hevea, TKS, guayule, and combinations thereof. Elastomers may be present in the gum base at levels of about 1 to about 30%, or about 2 to about 25% or about 5 to about 20% by weight of the gum base.

The gum base of the present disclosure may further comprise an elastomer plasticizer (i.e., elastomer solvent), which serves to vary the firmness of the gum base, and to soften the elastomer and allow it to be blended with other gum base components. Plasticizers used in the gum base of the present disclosure may include triacetin, medium chain triglyceride, mono-, di- and triglycerides of fatty acids, terpene resins derived from alpha-pinene, beta-pinene or d-limonene, triglycerides of non-hydrogenated, partially hydrogenated and fully hydrogenated cottonseed oil, soybean oil, palm oil, palm kernel oil, coconut oil, safflower oil, tallow oil, cocoa butter, unsaturated oils that contain, as one or more of their constituent groups, fatty acids of carbon chain length of from 6 to 18, monoglycerides, diglycerides, acetylated monoglycerides, distilled mono-, and di-glycerides and lecithin may, from their manufacturing processing, contain triglyceride levels less than 2 percent by weight. Mono- and diglycerides maybe considered as being of the same family as fats. In one embodiment, the plasticizers are selected from the group consisting of triacetin, acetylated mono-, di- and triglycerides of short chain fatty acids, acetlyated mono-, di- and triglycerides of medium chain fatty acids, acetylated monoglycerides of long chain fatty acids, methyl ester of rosin, low molecular weight PVAc, and combinations thereof.

The elastomer plasticizers used may be of one type or of combinations of more than one. Typically, the ratios of one to the other are dependent on each respective softening point, on each effect on flavor release, and on each respective degree of tack they cause to the gum. In one embodiment, the elastomer plasticizers of the present disclosure are terpene resins. Elastomer plasticizers may be included at levels of about 1 to about 50%, or about 3 to about 40%, or about 5 to about 35% by weight of the gum base.

Emulsifiers, which also sometimes have plasticizing properties, used in gum bases of the present disclosure may be selected from the group consisting of: glycerol mono and distearate, lecithin, mono and di-glycerides of fatty acids, triacetin, acetylated monoglyceride, polyglycerol esters, glycerol triacetate and carbohydrate polyesters, and combinations thereof.

The gum bases of the present disclosure may further contain waxes. Waxes aid in the solidification of gum bases and improving the shelf-life and texture. Wax crystal also improves the release of flavor. The smaller crystal size allows slower release of flavor since there is more hindrance of the flavor's escape from this wax versus a wax having larger crystal sizes.

Synthetic waxes are produced by means atypical of petroleum wax production and thus are not considered petroleum wax. These synthetic waxes may be used in accordance with the present disclosure and may be included optionally in the gum base and gum. The synthetic waxes may include waxes containing branched alkanes and copolymerized with monomers such as, but not limited to, polypropylene and polyethylene and Fischer-Tropsch type waxes. Polyethylene wax is not in the same category as polyethylene, a polymer of ethylene monomers. Rather, polyethylene wax is a synthetic wax containing alkane units of varying lengths having attached thereto ethylene monomers.

In another embodiment, the gum bases of the present disclosure are wax-free. In these embodiments, wax is omitted and may be compensated for by using increased levels of fats and oils as is known in the art.

Other optional ingredients, such as antioxidants, may also be used in the gum base. Antioxidants prolong shelf-life and storage of gum base, finished gum or their respective components, including fats and flavor oils. Antioxidants suitable for use in gum base or gum of the present disclosure include butylated hydroxyanisole (BHA), butylated hydroxytoluene (BHT), beta-carotenes, tocopherols, acidulants such as vitamin C, propyl gallate, and other synthetic and natural types, or combinations thereof. Preferably, the antioxidants used in the gum base are butylated hydroxyanisole (BHA), butylated hydroxytoluene (BHT), tocopherols, or combinations thereof.

Flavorants and colorants impart characteristics or remove or mask undesired characteristics. Colorants may typically include FD&C type lakes, plant extracts, fruit and vegetable extracts, and titanium dioxide. Flavorants may typically include cocoa powder, heat-modified amino acids, and other vegetable extracts.

Selection of various components in chewing gum bases or chewing gum formulations of this disclosure typically are dictated by factors, including for example the desired properties (e.g., physical (mouthfeel), taste, odor, and the like) and/or applicable regulatory requirements (e.g., in order to have a food grade product, food grade components, such as food grade approved oils like vegetable oil, may be used.)

### Chewing gum formulation

The chewing gum base of the present disclosure may be used to form a chewing gum. The chewing gum base of the present disclosure may constitute from about 5 to about 95% by weight of a chewing gum. More typically, the chewing gum base may constitute from about 10 to about 50% by weight of the chewing gum, or from about 20% to about 35% by weight of the chewing gum.

In addition to a water-insoluble gum base portion, a typical chewing gum composition includes a water-soluble bulk portion (or bulking agent) and one or more flavoring agents. The water-soluble portion can include high intensity sweeteners, binders, flavoring agents (which may be water insoluble), water-soluble softeners, gum emulsifiers, colorants, acidulants, fillers, antioxidants, and other components that provide desired attributes.

Water-soluble softeners, which may also be known as water-soluble plasticizers and plasticizing agents, generally constitute between approximately 0.5 to about 25% by weight of the chewing gum. Water-soluble softeners may include glycerin, lecithin, and combinations thereof. Aqueous sweetener solutions such as those containing sorbitol, hydrogenated starch hydrolysates (HSH), corn syrup and combinations thereof, may also be used as softeners and binding agents (binders) in chewing gum.

A bulking agent or bulk sweetener may be useful in chewing gums of this disclosure to provide sweetness, bulk and texture to the product. Typical bulking agents include sugars, sugar alcohols, and combinations thereof. Bulking agents typically constitute from about 5 to about 95% by weight of the chewing gum, more typically from about 20 to about 80% by weight and, still more typically, from about 30 to about 70% by weight of the gum. Sugar bulking agents generally include saccharide containing components commonly known in the chewing gum art, including, but not limited to, sucrose, dextrose, maltose, dextrin, dried invert sugar, fructose, levulose, galactose, corn syrup solids, and the like, alone or in combination. In sugarless gums, sugar alcohols such as sorbitol, maltitol, erythritol, isomalt, mannitol, xylitol, isomaltulose, hydrogenated starch hydrolysates, allulose, and combinations thereof are substituted for sugar bulking agents. Sugar alcohols are sometimes referred to as polyols or alditols. Combinations of sugar and sugarless bulking agents may also be used.

In addition to the above bulk sweeteners, chewing gums typically comprise a binder/softener in the form of a syrup or high-solids solution of sugars and/or sugar alcohols. In the case of sugar gums, corn syrups and other dextrose syrups (which contain dextrose and significant amounts higher saccharides) are most commonly employed. These include syrups of various DE levels including high-maltose syrups and high fructose syrups. In the case of sugarless products, solutions of sugar alcohols including sorbitol solutions and hydrogenated starch hydrolysate syrups are commonly used. Such syrups serve to soften the initial chew of the product, reduce crumbliness and brittleness and increase flexibility in stick and tab products. They may also control moisture gain or loss and provide a degree of sweetness depending on the particular syrup employed. In the case of syrups and other aqueous solutions, it is generally desirable to use the minimum practical level of water in the solution to the minimum necessary to keep the solution free flowing at acceptable handling temperatures. The usage level of such syrups and solutions should be adjusted to limit total moisture in the gum to less than 3 wt.%, preferably less than 2 wt.% and most preferably less than 1 wt.%.

High intensity artificial sweeteners can also be used in combination with the above-described sweeteners. Preferred sweeteners include, but are not limited to sucralose, aspartame, salts of acesulfame, alitame, neotame, saccharin and its salts, cyclamic acid and its salts, glycyrrhizin, stevia and stevia compounds such as rebaudioside A, dihydrochalcones, thaumatin, monellin, lo han guo and the like, alone or in combination. To provide longer lasting sweetness and flavor perception, it may be desirable to encapsulate or otherwise control the release of at least a portion of the artificial sweetener. Such techniques as wet granulation, wax granulation, spray drying, spray chilling, fluid bed coating, coacervation, and fiber extrusion may be used to achieve the desired release characteristics.

Usage level of the artificial sweetener will vary greatly and will depend on such factors as potency of the sweetener, rate of release, desired sweetness of the product, level and type of flavor used and cost considerations. Thus, the active level of artificial sweetener may vary from 0.02 to about 8% by weight. When carriers used for encapsulation are included, the usage level of the encapsulated sweetener will be proportionately higher.

Combinations of sugar and/or sugarless sweeteners may be used in chewing gum. Additionally, the softener may also provide additional sweetness such as with aqueous sugar or alditol solutions.

If a low-calorie gum is desired, a low caloric bulking agent can be used. Examples of low caloric bulking agents include: polydextrose; Raftilose, Raftilin; fructooligosaccharides (NutraFlora); Palatinose oligosaccharide; Guar Gum Hydrolysate (Sun Fiber); or indigestible dextrin (Fibersol). However, other low calorie bulking agents can be used. In addition, the caloric content of a chewing gum can be reduced by increasing the relative level of gum base while reducing the level of caloric sweeteners in the product. This can be done with or without an accompanying decrease in piece weight.

Flavorants and colorants impart characteristics or remove or mask undesired characteristics. A variety of flavoring agents can be used. The flavoring agent can be used in amounts of approximately 0.1 to about 15 weight percent of the gum, and preferably, about 0.2 to about 5%. Flavoring agents may include essential oils, synthetic flavors or mixtures thereof including, but not limited to, oils derived from plants and fruits such as citrus oils, fruit essences, peppermint oil, spearmint oil, other mint oils, clove oil, oil of wintergreen, anise, and the like. Artificial flavoring agents and components may also be used. Natural and artificial flavoring agents may be combined in any sensorially acceptable fashion. Sensate components which impart a perceived tingling or thermal response while chewing, such as a cooling or heating effect, also may be included. Such components include cyclic and acyclic carboxamides, menthol derivatives, and capsaicin among others. Acidulants may be included to impart tartness.

A chewing gum composition made with the chewing gum base of the present disclosure may also have spray dried flavor as a partial or complete replacement of liquid flavor. The loading of the spray dried flavor used in the present disclosure can be approximately 20% active. The amount of spray dried flavor may be used up to about 2% by weight of the chewing gum composition. In some embodiments, spray dried flavor is used in amounts ranging from about 0.2% to about 2% by weight of the chewing gum composition. Even more preferably, spray dried flavor is used at about 1% by weight of the chewing gum composition.

Optional ingredients such as colors, emulsifiers and pharmaceutical agents, coolants, oral sensates, active agents, antimicrobials, tooth whitening agents, medicaments, breath freshening agents, wellness agents, weight loss agents, and combinations thereof may be added to the chewing gum. Colorants may typically include FD&C type lakes, plant extracts, fruit and vegetable extracts and titanium dioxide. The chewing gums of the present disclosure may further include optional ingredients such as dental health actives such as minerals, nutritional supplements such as vitamins, health promoting actives such as antioxidants for example resveratrol, stimulants such as caffeine, medicinal compounds, and other such additives. These active agents may be added neat to the gum mass or encapsulated using known means to prolong release and/or prevent degradation. The actives may be added to coatings, rolling compounds and liquid or powder fillings where such are present.

### Preparation of gum base

The present disclosure further provides processes for preparing the gum bases, wherein the processes proceed without the use of mineral fillers. As discussed herein, mineral fillers are often used during the formation of chewing gum bases. For example, such fillers may be used at multiple stages during the gum base manufacturing process, such as during elastomer grinding, elastomer compounding, and gum rolling, among others. The mineral filler used during one or all of these stages of gum base production may be eliminated and replaced with at least one chewing gum base filler component selected from water-insoluble polysaccharides and derivatives thereof, water-insoluble bamboo fibers, water-insoluble proteins, and combinations thereof. The resulting processes produce gum bases that are essentially free of mineral filler, but that still closely maintain the function and benefit associated with the inclusion of mineral fillers in chewing gum bases.

### Elastomer grinding

The present disclosure further provides a process for grinding an elastomer, the process comprising combining an elastomer with a polyol to form an elastomer blend, and grinding the elastomer blend, wherein the elastomer blend is essentially free of mineral filler. In one embodiment, the elastomer blend is free of mineral filler.

Mineral fillers, and in particular talc and calcium carbonate, are commonly used in the process of grinding certain elastomers, such as butyl rubber, butadiene-styrene copolymers (SBR), and polyisobutylene (PIB), prior to gum base formation. For grinding, the mineral fillers are typically used at concentrations of about 3 to about 10% by weight of the elastomer. Elastomer grinding may improve the efficiency of base mixing by reducing the mixing times of the batch base and enabling the use of extruders in conjunction with calibrated feeders. The mineral fillers are used as a processing aid in the grinding process and help prevent the ground elastomer from blocking during feeding and conveying to the mixers or extruders. In the processes of the present disclosure, the mineral fillers are replaced by at least one chewing gum base filler component selected from water-insoluble polysaccharides and derivatives thereof, water-insoluble bamboo fibers, water-insoluble proteins, and combinations thereof. The grinding may be accomplished using any suitable grinder known in the art.

### Compounding

The present disclosure further provides a process for preparing a chewing gum base. The process comprises mixing an elastomer and at least one chewing gum base filler component selected from water-insoluble polysaccharides and derivatives thereof, water-insoluble bamboo fibers, water-insoluble proteins, and combinations thereof, wherein the resulting chewing gum base is essentially free of mineral filler. In one embodiment, the resulting chewing gum base is free of mineral filler. In one embodiment, the elastomer comprises a ground elastomer, and the process further comprises grinding an elastomer, according to the process set forth herein, to form the ground elastomer.

Gum bases are typically prepared by adding an amount of the elastomer, polyol, and any plasticizer to a heated (50-240°F) sigma blade mixer with a front to rear speed ratio of about 1:1 to about 2:1, the higher ratio typically being used for chewing gum base which requires more rigorous compounding of its elastomers. In an embodiment of the process according to the present disclosure, the elastomer is ground according to the process described herein prior to mixing with the plasticizer. In another embodiment, elastomer may comprise a ground elastomer, an unground elastomer, or combinations thereof. The unground elastomer may be any elastomer that has not been previously ground.

Compounding typically begins to be effective once the ingredients have massed together and become homogenous. Anywhere from 15 minutes to 90 minutes may be the length of compounding time. Preferably, the time of compounding is from 20 minutes to about 60 minutes. The amount of added plasticizer depends on the level of elastomer present. If too much elastomer plasticizer is added, the initial mass becomes over plasticized and not homogeneous.

Continuous processes using mixing extruders may also be used to prepare the gum base. After the initial ingredients have massed homogeneously and been compounded for the time desired, the balances of the base ingredients are added in a sequential manner until a completely homogeneous molten mass is attained. Typically, any remainder of elastomer and plasticizer are added after the initial compounding time. The optional waxes and the oils are typically added after the elastomer and plasticizers and during the next 60 minutes. Then the mass is allowed to become homogeneous before discharging.

Typical base batch processing times may vary from about one to about three hours, preferably from about 1.5 to 2.5 hours, depending on the formulation. The final mass temperature when discharged may be between 50° C and 130°C and preferably between 70° and 120°. The completed molten mass is emptied from the mixing kettle into coated or lined pans, extruded or cast into any desirable shape and allowed to cool and solidify. Those skilled in the art will recognize that many variations of the above-described procedure may be followed.

In the alternative continuous process, ingredients are added continuously at various points along the length of the extruder. In this case, the transit time through the extruder would be substantially less than an hour.

### Preparation of chewing gum

The gum bases of the present disclosure can be included in chewing gum formulations. In general, chewing gum is manufactured by sequentially adding the various chewing gum ingredients to a commercially available mixer known in the art. After the initial ingredients have been thoroughly mixed, the gum mass is discharged from the mixer and shaped into the desired form such as by rolling into sheets and cutting into sticks, extruded into chunks, or casting into pellets.

Generally, the ingredients are mixed by first melting the gum base and adding it to the running mixer. The base may also be melted in the mixer itself. Color or emulsifiers may also be added at this time. A softener such as glycerin may also be added at this time, along with syrup and a portion of the bulking agent/sweetener. Further portions of the bulking agent/sweetener may then be added to the mixer. A flavoring agent is typically added with the final portion of the bulking agent/sweetener. A high-intensity sweetener is preferably added after the final portion of bulking agent and flavor have been added.

Although in certain embodiments the entire mixing procedure typically takes from five to fifteen minutes, longer mixing times may sometimes be required. Those skilled in the art will recognize that many variations of the above-described procedure may be followed. One specifically contemplated embodiment is the use of an extruding mixer for continuous processing. In such a process, ingredients are added continuously at various points along the length of the extruder while homogeneously mixed gum continuously issues from the discharge end of the extruder. After mixing, the chewing gum is formed into a final product shape using well known techniques which may employ extrusion, rolling, sheeting, scoring, or forming. The final product shape may be stick, tabs, chunks, pellets, balls, or any other desired shape.

Pellet and ball forms, among others, are typically pan coated. Conventional panning procedures generally coat with sucrose, but recent advances in panning have allowed the use of other carbohydrate materials to be used in the place of sucrose. Some of these components include, but are not limited to, erythritol, sorbitol, dextrose, maltose, xylitol, hydrogenated isomaltulose and other new polyols or a combination thereof. These materials may be blended with panning modifiers including, but not limited to, gum arabic, maltodextrins, corn syrup, gelatin, cellulose type materials like carboxymethyl cellulose or hydroxymethyl cellulose, starch and modified starches, vegetable gums like alginates, locust bean gum, guar gum and gum tragacanth, insoluble carbonates like calcium carbonate or magnesium carbonate, and talc. Erythritol also acts as a panning modifier with other panning materials to improve product quality. Anti-tack agents may also be added as panning modifiers, which allow the use of a variety of carbohydrates and sugar alcohols to be used in the development of new panned or coated gum products. Flavors may also be added with the erythritol sweetener to yield unique product characteristics.

If the chewing gum composition is in a pellet form, the initial coating syrup should have higher binder levels, e.g., gum Arabic or gum tallah, in the pre-coat, because conventional pre-coat does not stick to the pellet as it would on a conventional chewing gum composition. The increase of a binder allows for the appropriate adherence of the pre-coat. The chewing gum composition of the present disclosure may be coated in amount ranging from about 30% to about 38%. Preferably, the coating is present at about 32% to about 36%.

### Examples

The invention is further demonstrated in the following prophetic examples. The examples are for purposes of illustration and are not intended to limit the scope of the present invention.

Once incorporated into gum base, the chewing gum base filler component of the present disclosure may soften the gum base and compromise its cohesiveness. The chewing gum bases in the following prophetic examples may compensate the potential loss of cohesiveness and elasticity.

### Prophetic Example 1: Gum Base Formulas Containing Hydroxyproyl Starch

| | Exp 1 (wt%) | Exp 2 (wt%) | Exp 3 (wt%) | Exp 4 (wt%) | Exp 5 (wt%) | Exp 6 (wt%) |
|---|---|---|---|---|---|---|
| Hydroxyproyl Starch | 5 | 5 | 10 | 10 | 15 | 15 |
| Butyl Rubber | 10 | 15 | 10 | 15 | 10 | 15 |
| PIB | 5 | 5 | 5 | 0 | 5 | 0 |
| Terpene resin | 25 | 25 | 25 | 25 | 25 | 25 |
| Polyvinyl Acetate | 25 | 25 | 25 | 25 | 20 | 20 |
| Vegetable fats | 15 | 10 | 10 | 10 | 10 | 10 |
| Emulsifier | 4.95 | 4.95 | 4.95 | 4.95 | 4.95 | 4.95 |
| Wax | 10 | 10 | 10 | 10 | 10 | 10 |
| Antioxidant | 0.05 | 0.05 | 0.05 | 0.05 | 0.05 | 0.05 |
| Total | 100 | 100 | 100 | 100 | 100 | 100 |

### Prophetic Example 2: Gum Base Formulas Containing Purified Zein (not part of the present invention)

| | Exp 7 (wt%) | Exp 8 (wt%) | Exp 9 (wt%) | Exp 10 (wt%) | Exp 11 (wt%) | Exp 12 (wt%) |
|---|---|---|---|---|---|---|
| Purified Zein | 5 | 5 | 10 | 10 | 15 | 15 |
| Butyl Rubber | 10 | 15 | 10 | 15 | 10 | 15 |
| PIB | 5 | 5 | 5 | 0 | 5 | 0 |
| Terpene resin | 25 | 25 | 25 | 25 | 25 | 25 |
| Polyvinyl Acetate | 25 | 25 | 25 | 25 | 20 | 20 |
| Vegetable fats | 15 | 10 | 10 | 10 | 10 | 10 |
| Emulsifier | 4.95 | 4.95 | 4.95 | 4.95 | 4.95 | 4.95 |
| Wax | 10 | 10 | 10 | 10 | 10 | 10 |
| Antioxidant | 0.05 | 0.05 | 0.05 | 0.05 | 0.05 | 0.05 |
| Total | 100 | 100 | 100 | 100 | 100 | 100 |

### Prophetic Example 3: Gum Base Formulas Containing Bamboo fiber

| | Exp 13 (wt%) | Exp 14 (wt%) | Exp 15 (wt%) | Exp 16 (wt%) | Exp 17 (wt%) | Exp 18 (wt%) |
|---|---|---|---|---|---|---|
| Bamboo fiber | 5 | 5 | 10 | 10 | 15 | 15 |
| Butyl Rubber | 10 | 15 | 10 | 15 | 10 | 15 |
| PIB | 5 | 5 | 5 | 0 | 5 | 0 |
| Terpene resin | 25 | 25 | 25 | 25 | 25 | 25 |
| Polyvinyl Acetate | 25 | 25 | 25 | 25 | 20 | 20 |
| Vegetable fats | 15 | 10 | 10 | 10 | 10 | 10 |
| Emulsifier | 4.95 | 4.95 | 4.95 | 4.95 | 4.95 | 4.95 |
| Wax | 10 | 10 | 10 | 10 | 10 | 10 |
| Antioxidant | 0.05 | 0.05 | 0.05 | 0.05 | 0.05 | 0.05 |
| Total | 100 | 100 | 100 | 100 | 100 | 100 |

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art.

## Claims

1. A chewing gum base comprising:
at least one chewing gum base filler component selected from the group consisting of (i) water-insoluble polysaccharides and derivatives thereof, wherein the water-insoluble polysaccharides comprise hydroxypropyl starch, (ii) water-insoluble bamboo fibers, and (iii) combinations thereof; and
a chewing gum non-filler base component,
wherein the chewing gum base comprises mineral filler in an amount of less than 0.5% by weight of the chewing gum base.

2. A chewing gum composition comprising:
a chewing gum base comprising
(1) at least one chewing gum base filler component selected from the group consisting of (i) water-insoluble polysaccharides and derivatives thereof wherein the water-insoluble polysaccharides comprise hydroxypropyl starch, (ii) water-insoluble bamboo fibers, and (iii) combinations thereof, and
(2) a chewing gum non-filler base component,
wherein the chewing gum composition comprises mineral filler in an amount of less than 0.5% by weight of the chewing gum base.

3. The chewing gum base of claim 1, or the chewing gum composition of claim 2, comprising the chewing gum base filler component in an amount of from 0.5% to 25% by weight of the chewing gum base.

4. The chewing gum base of any one of claims 1 or 3, or the chewing gum composition of any one of claims 2-3, comprising the chewing gum non-filler base component in an amount of from 75% to 99.5% by weight of the chewing gum base.

5. The chewing gum base of any one of claims 1 or 3-4, or the chewing gum composition of any one of claims 2-4, wherein the mineral filler is selected from the group consisting of magnesium carbonate, calcium carbonate, ground limestone, magnesium silicate, aluminum silicate, clay alumina, talc, titanium dioxide, monocalcium phosphate, dicalcium phosphate, tricalcium phosphate, and calcium sulfate.

6. The chewing gum base of any one of claims 1 or 3-5, or the chewing gum composition of any one of claims 2-5, wherein the chewing gum base filler component comprises hydroxypropyl starch.

7. The chewing gum base of any one of claims 1 or 3-5, or the chewing gum composition of any one of claims 2-5, wherein the chewing gum base filler component comprises water-insoluble bamboo fibres.

8. The chewing gum base of any one of claims 1 or 3-7, or the chewing gum composition of any one of claims 2-7, wherein the chewing gum non-filler base component comprises an elastomer.

9. The chewing gum base of any one of claims 1 or 3-8, or the chewing gum composition of any one of claims 2-8, wherein the chewing gum non-filler base component comprises at least one ingredient selected from the group consisting of elastomers, elastomer plasticizers, resins, emulsifiers, waxes, and antioxidants.

10. The chewing gum base of any one of claims 1 or 3-9, wherein the chewing gum base is free of mineral filler.

11. The chewing gum composition of any one of claims 2-9, wherein the chewing gum composition is free of mineral filler.

## Patentansprüche

1. Kaugummibasis, umfassend:
mindestens eine Kaugummibasis-Füllstoffkomponente, ausgewählt aus der aus (i) wasserunlöslichen Polysacchariden und Derivaten davon, wobei die wasserunlöslichen Polysaccharide Hydroxypropylstärke umfassen, (ii) wasserunlöslichen Bambusfasern und (iii) Kombinationen davon bestehenden Gruppe, und
eine Kaugummibasis-Nichtfüllstoffkomponente,
wobei die Kaugummibasis mineralischen Füllstoff in einer Menge von weniger als 0,5 Gew.-% der Kaugummibasis umfasst.

2. Kaugummizusammensetzung, umfassend:
eine Kaugummibasis, umfassend
(1) mindestens eine Kaugummibasis-Füllstoffkomponente, ausgewählt aus der aus (i) wasserunlöslichen Polysacchariden und Derivaten davon, wobei die wasserunlöslichen Polysaccharide Hydroxypropylstärke umfassen, (ii) wasserunlöslichen Bambusfasern und (iii) Kombinationen davon bestehenden Gruppe, und
(2) eine Kaugummibasis-Nichtfüllstoffkomponente,
wobei die Kaugummizusammensetzung mineralischen Füllstoff in einer Menge von weniger als 0,5 Gew.-% der Kaugummibasis umfasst.

3. Kaugummibasis nach Anspruch 1 oder Kaugummizusammensetzung nach Anspruch 2, umfassend die Kaugummibasis-Füllstoffkomponente in einer Menge von 0,5 Gew.-% bis 25 Gew.-% der Kaugummibasis.

4. Kaugummibasis nach einem der Ansprüche 1 oder 3 oder Kaugummizusammensetzung nach einem der Ansprüche 2-3, umfassend die Kaugummibasis-Nichtfüllstoffkomponente in einer Menge von 75 Gew.-% bis 99,5 Gew.-% der Kaugummibasis.

5. Kaugummibasis nach einem der Ansprüche 1 oder 3-4 oder Kaugummizusammensetzung nach einem der Ansprüche 2-4, wobei der mineralische Füllstoff aus der aus Magnesiumcarbonat, Calciumcarbonat, gemahlenem Kalkstein, Magnesiumsilicat, Aluminiumsilicat, Tonerde, Talkum, Titandioxid, Monocalciumphosphat, Dicalciumphosphat, Tricalciumphosphat und Calciumsulfat bestehenden Gruppe ausgewählt ist.

6. Kaugummibasis nach einem der Ansprüche 1 oder 3-5 oder Kaugummizusammensetzung nach einem der Ansprüche 2-5, wobei die Kaugummibasis-Füllstoffkomponente Hydroxypropylstärke umfasst.

7. Kaugummibasis nach einem der Ansprüche 1 oder 3-5 oder Kaugummizusammensetzung nach einem der Ansprüche 2-5, wobei die Kaugummibasis-Füllstoffkomponente wasserunlösliche Bambusfasern umfasst.

8. Kaugummibasis nach einem der Ansprüche 1 oder 3-7 oder Kaugummizusammensetzung nach einem der Ansprüche 2-7, wobei die Kaugummibasis-Nichtfüllstoffkomponente ein Elastomer umfasst.

9. Kaugummibasis nach einem der Ansprüche 1 oder 3-8 oder Kaugummizusammensetzung nach einem der Ansprüche 2-8, wobei die Kaugummibasis-Nichtfüllstoffkomponente mindestens einen aus der aus Elastomeren, Elastomerweichmachern, Harzen, Emulgatoren, Wachsen und Antioxidantien bestehenden Gruppe ausgewählten Bestandteil umfasst.

10. Kaugummibasis nach einem der Ansprüche 1 oder 3-9, wobei die Kaugummibasis frei von mineralischem Füllstoff ist.

11. Kaugummizusammensetzung nach einem der Ansprüche 2-9, wobei die Kaugummizusammensetzung frei von mineralischem Füllstoff ist.

## Revendications

1. Base de chewing-gum comprenant :
au moins un composant charge de base de chewing-gum choisi dans le groupe constitué par (i) des polysaccharides insolubles dans l'eau et leurs dérivés, dans laquelle les polysaccharides insolubles dans l'eau comprennent un hydroxypropylamidon, (ii) des fibres de bambou insolubles dans l'eau, et (iii) des combinaisons de ceux-ci ; et
un composant base non de charge de chewing-gum,
dans laquelle la base de chewing-gum comprend une charge minérale en une quantité inférieure à 0,5% en poids de la base de chewing-gum.

2. Composition de chewing-gum comprenant:
une base de chewing-gum comprenant
(1) au moins un composant charge de base de chewing-gum choisi dans le groupe constitué par (i) des polysaccharides insolubles dans l'eau et leurs dérivés, dans laquelle les polysaccharides insolubles dans l'eau comprennent un hydroxypropylamidon, (ii) des fibres de bambou insolubles dans l'eau, et (iii) des combinaisons de ceux-ci, et
(2) un composant base non de charge de chewing-gum,
dans laquelle la composition de chewing-gum comprend une charge minérale en une quantité inférieure à 0,5% en poids de la base de chewing-gum.

3. Base de chewing-gum selon la revendication 1, ou composition de chewing-gum selon la revendication 2, comprenant le composant charge de base de chewing-gum en une quantité de 0,5 % à 25 % en poids de la base de chewing-gum.

4. Base de chewing-gum selon l'une quelconque des revendications 1 ou 3, ou composition de chewing-gum selon l'une quelconque des revendications 2 à 3, comprenant le composant base non de charge de chewing-gum en une quantité de 75 % à 99 % en poids de la base de chewing-gum.

5. Base de chewing-gum selon l'une quelconque des revendications 1 ou 3 à 4, ou composition de chewing-gum selon l'une quelconque des revendications 2 à 4, dans laquelle la charge minérale est choisie dans le groupe constitué par le carbonate de magnésium, le carbonate de calcium, le calcaire broyé, le silicate de magnésium, le silicate d'aluminium, l'argile, l'alumine, le talc, le dioxyde de titane, le phosphate monocalcique, le phosphate dicalcique, le phosphate tricalcique et le sulfate de calcium.

6. Base de chewing-gum selon l'une quelconque des revendications 1 ou 3 à 5, ou composition de chewing-gum selon l'une quelconque des revendications 2 à 5, dans laquelle le composant charge de base de chewing-gum comprend de l'hydroxypropylamidon.

7. Base de chewing-gum selon l'une quelconque des revendications 1 ou 3 à 5, ou composition de chewing-gum selon l'une quelconque des revendications 2 à 5, dans laquelle le composant charge de base de chewing-gum comprend des fibres de bambou insolubles dans l'eau.

8. Base de chewing-gum selon l'une quelconque des revendications 1 ou 3 à 7, ou composition de chewing-gum selon l'une quelconque des revendications 2 à 7, dans laquelle le composant base non de charge de chewing-gum comprend un élastomère.

9. Base de chewing-gum selon l'une quelconque des revendications 1 ou 3 à 8, ou composition de chewing-gum selon l'une quelconque des revendications 2 à 8, dans laquelle le composant base non de charge de chewing-gum comprend au moins un ingrédient choisi dans le groupe constitué par les élastomères, les plastifiants élastomères, les résines, les émulsifiants, les cires, et les antioxydants.

10. Base de chewing-gum selon l'une quelconque des revendications 1 ou 3 à 9, dans laquelle la base de chewing-gum est exempte de charge minérale.

11. Composition de chewing-gum selon l'une quelconque des revendications 2 à 9, dans laquelle la composition de chewing-gum est exempte de charge minérale.
